# EUROPEAN PATENT APPLICATION

(11) **EP 4 844 337 A1**
(43) Date of publication of application: **25.11.2026**
(21) Application number: 24921461.0
(22) Date of filing: 24.09.2024
(51) Int. Cl.: G01B 15/06

(54) **DEFORMATION SENSING METHOD AND APPARATUS, AND DEVICE AND MEDIUM**

(30) Priority: 31.01.2024 CN 202410154960
(71) Applicant: ZTE Corporation, Shenzhen, Guangdong 518057 (CN)
(72) Inventor: WANG, Zhongbin, Shenzhen, Guangdong 518057 (CN); XIA, Shuqiang, Shenzhen, Guangdong 518057 (CN); MA, Yihua, Shenzhen, Guangdong 518057 (CN); WANG, Yuxin, Shenzhen, Guangdong 518057 (CN); BAI, Chen, Shenzhen, Guangdong 518057 (CN); LI, Songqian, Shenzhen, Guangdong 518057 (CN)
(74) Representative: Savi, Massimiliano
(86) International application number: PCT/CN2024/120856
(87) International publication number: WO 2025/161437

(57) **Abstract**

A deformation sensing method, comprising: determining a first deformation characteristic value corresponding to a target monitoring point and a second deformation characteristic value corresponding to a reference point (S110); on the basis of the second deformation characteristic value, compensating for the first deformation characteristic value to obtain a third deformation characteristic value corresponding to the target monitoring point (S120); and on the basis of the third deformation characteristic value, determining a deformation degree corresponding to the target monitoring point (S130). Further disclosed are a deformation sensing apparatus, an electronic device, a computer-readable storage medium and a computer program product.

## Description

### CROSS-REFERENCE TO RELATED APPLICATION

This application is based on and claims priority to Chinese Patent Application No. 202410154960.7, filed on January 31, 2024, the entire content of which is incorporated herein by reference.

### TECHNICAL FIELD

Embodiments of the present application relate to the field of communication technologies, and in particular, to a deformation sensing method, apparatus, device, medium, and computer program product.

### BACKGROUND

The coexistence or integration technology of communication and sensing functions is one of the key technologies of next-generation mobile communication systems, and is currently a research focus of academia and industry. A communication and sensing device samples a propagation space by transmitting electromagnetic wave signals, and has the capability of sensing the surrounding environment. The use of the communication and sensing device for sensing micro-deformations of an object has also become one of the main applications attracting attention in the industry. For example, a communication and sensing base station erected on a building rooftop can be used to monitor the operation states of nearby buildings, such as deformation states including tilting, subsidence, and swaying, and can also be used for operation state monitoring in scenarios such as bridges, mines, road slopes, and mountain bodies.

The communication and sensing device has the capability of monitoring micro-deformations of an object by continuously monitoring a target observation point, and the monitoring process can be divided into three stages: acquiring deformation information, analyzing the deformation information, and predicting future deformation trends. In an actual environment, the observed deformation information includes not only the deformation information of the monitoring point itself, but also observation errors caused by environmental factors such as noise and the atmosphere, and these errors affect the deformation inversion accuracy of the monitoring point to different degrees. How to eliminate or reduce the influence of the observation errors on inverting the true deformation degree of the monitoring point, and accurately sense the deformation degree of the monitoring point, has become a technical problem that urgently needs to be solved in the present field.

### SUMMARY

Embodiments of the present application provide a deformation sensing method, apparatus, device, medium, and computer program product, which can accurately sense a deformation degree of a monitoring point.

In accordance with a first aspect of the present application, an embodiment provides a deformation sensing method, the method including:
determining a first deformation feature value corresponding to a target monitoring point and a second deformation feature value corresponding to a reference point;
compensating the first deformation feature value according to the second deformation feature value, to obtain a third deformation feature value corresponding to the target monitoring point; and
determining a deformation degree of the target monitoring point according to the third deformation feature value.

In accordance with a second aspect of the present application, an embodiment provides a deformation sensing apparatus, the apparatus including:
a feature determination module, configured to determine a first deformation feature value corresponding to a target monitoring point and a second deformation feature value corresponding to a reference point;
a compensation module, configured to compensate the first deformation feature value according to the second deformation feature value, to obtain a third deformation feature value corresponding to the target monitoring point; and
a deformation determination module, configured to determine a deformation degree of the target monitoring point according to the third deformation feature value.

In accordance with a third aspect of the present application, an embodiment provides an electronic device, including:
one or more processors; and
a memory, having one or more programs stored thereon, wherein the one or more programs, when executed by the one or more processors, cause the one or more processors to carry out the deformation sensing method described in the first aspect above.

In accordance with a fourth aspect of the present application, an embodiment provides a computer-readable storage medium having a computer program stored thereon, wherein the program, when executed by a processor, causes the processor to carry out the deformation sensing method described in the first aspect above.

In accordance with a fifth aspect of the present application, an embodiment provides a computer program product, including a computer program, wherein the computer program, when executed by a processor, causes the processor to carry out the deformation sensing method described in the first aspect above.

In the deformation sensing method, apparatus, device, and medium provided by the embodiments of the present application, the deformation sensing method first determines a first deformation feature value corresponding to a target monitoring point and a second deformation feature value corresponding to a reference point, then compensates the first deformation feature value according to the second deformation feature value to obtain a third deformation feature value corresponding to the target monitoring point, and determines a deformation degree of the target monitoring point according to the third deformation feature value. By compensating the first deformation feature value of the target monitoring point using the second deformation feature value of the reference point, the influence of observation errors caused by the actual environment on inverting the deformation degree of the target monitoring point can be effectively compensated, and the deformation degree of the target monitoring point can be more accurately sensed.

### BRIEF DESCRIPTION OF DRAWINGS

The accompanying drawings are used to provide a further understanding of the technical solutions of the present application and constitute a part of the specification. They are used together with the embodiments of the present application to explain the technical solutions of the present application, and do not constitute a limitation on the technical solutions of the present application.
FIG. 1 is a schematic flowchart of a deformation sensing method provided by an embodiment of the present application;
FIG. 2 is a schematic sub-step flowchart of step S120 in FIG. 1;
FIG. 3 is a schematic sub-step flowchart of step S110 in FIG. 1;
FIG. 4 is a schematic sub-step flowchart of step S330 in FIG. 3;
FIG. 5 is a schematic sub-step flowchart of step S330 in FIG. 3;
FIG. 6 is a schematic diagram of an implementation scenario provided by an embodiment of the present application;
FIG. 7 is a schematic diagram of another implementation scenario provided by an embodiment of the present application;
FIG. 8 is a schematic diagram of another implementation scenario provided by an embodiment of the present application;
FIG. 9 is a schematic structural diagram of a deformation sensing apparatus provided by an embodiment of the present application; and
FIG. 10 is a schematic structural diagram of an electronic device provided by an embodiment of the present application.

### DETAILED DESCRIPTION

In order to make the objects, technical solutions, and advantages of the present application clearer, the present application is further described in detail below in conjunction with the accompanying drawings and embodiments. It should be understood that the specific embodiments described herein are only used to explain the present application, and are not used to limit the present application.

It should be understood that, in the description of the embodiments of the present application, if descriptions of "first," "second," etc. appear, they are only used for the purpose of distinguishing technical features, and should not be construed as indicating or implying relative importance, or as implicitly indicating the number of indicated technical features, or as implicitly indicating the order relationship of the indicated technical features. "At least one" means one or more, and "a plurality of" means two or more. "And/or" describes the association relationship of associated objects, indicating that three relationships may exist. For example, A and/or B may indicate the cases where A exists alone, A and B exist simultaneously, and B exists alone, wherein A and B may be singular or plural. The character "/" generally indicates an "or" relationship between the associated objects before and after. "At least one of the following" and similar expressions refer to any combination of these items, including any combination of single or plural items. For example, at least one of a, b, and c may indicate: a, b, c, a and b, a and c, b and c, or a and b and c, where a, b, and c may each be singular or plural.

In addition, the technical features involved in the various embodiments of the present application described below may be combined with each other as long as they do not conflict with each other.

The coexistence or integration technology of communication and sensing functions is one of the key technologies of next-generation mobile communication systems, and is currently a research focus of academia and industry. A communication and sensing device samples a propagation space by transmitting electromagnetic wave signals, and has the capability of sensing the surrounding environment. The use of the communication and sensing device for sensing micro-deformations of an object has also become one of the main applications attracting attention in the industry. For example, a communication and sensing base station erected on a building rooftop can be used to monitor the operation states of nearby buildings, such as deformation states including tilting, subsidence, and swaying, and can also be used for operation state monitoring in scenarios such as bridges, mines, road slopes, and mountain bodies.

The communication and sensing device has the capability of monitoring micro-deformations of an object by continuously monitoring a target observation point, and the monitoring process can be divided into three stages: acquiring deformation information, analyzing the deformation information, and predicting future deformation trends. In an actual environment, the observed deformation information includes not only the deformation information of the monitoring point itself, but also observation errors caused by environmental factors such as noise and the atmosphere, and these errors affect the deformation inversion accuracy of the monitoring point to different degrees. How to eliminate or reduce the influence of the observation errors on inverting the true deformation degree of the monitoring point, and accurately sense the deformation degree of the monitoring point, has become a technical problem that urgently needs to be solved in the present field.

Based on this, embodiments of the present application provide a deformation sensing method, apparatus, device, medium, and computer program product, which can accurately sense the deformation degree of a monitoring point.

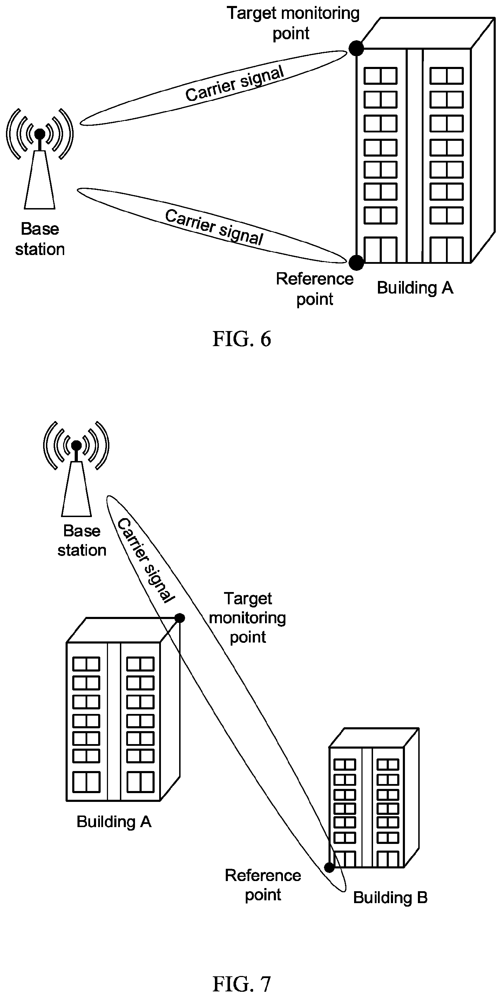

An embodiment of the present application first provides a deformation sensing method. The deformation sensing method may be applied to a communication and sensing device, which has the capability of transmitting and receiving carrier signals of an integrated waveform. Referring to FIG. 7, FIG. 7 shows a schematic diagram of an implementation environment of a deformation sensing method. As shown in FIG. 7, the deformation sensing method may be applied to a base station (Base Station). The base station transmits carrier signals of an integrated waveform to a plurality of target points in an observation region, and receives echo signals from the target points. By continuously observing the target monitoring point, the base station receives an echo signal sequence of the target monitoring point in a time dimension, processes and analyzes the echo signal sequence, and then determines the deformation degree of the target monitoring point.

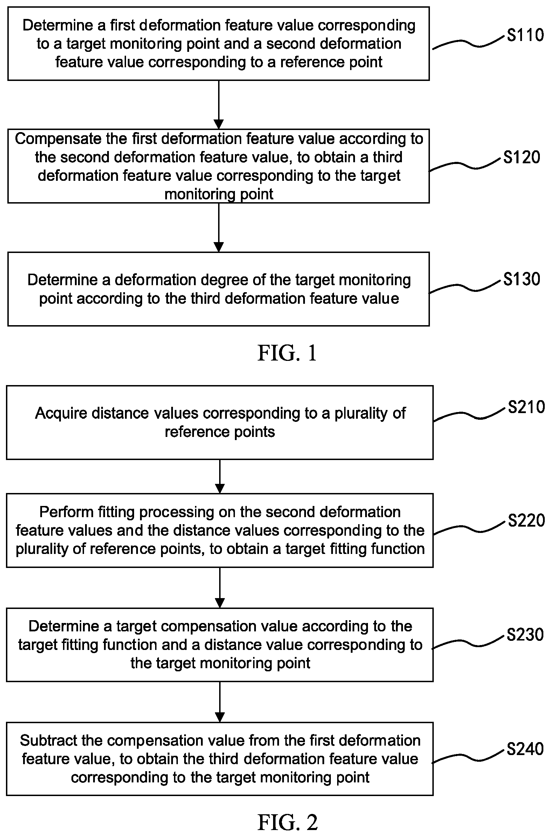

Referring to FIG. 1, FIG. 1 shows a deformation sensing method provided by an embodiment of the present application. As shown in FIG. 1, the deformation sensing method includes, but is not limited to, step S110 to step S130.

At step S110, a first deformation feature value corresponding to a target monitoring point and a second deformation feature value corresponding to a reference point are determined.

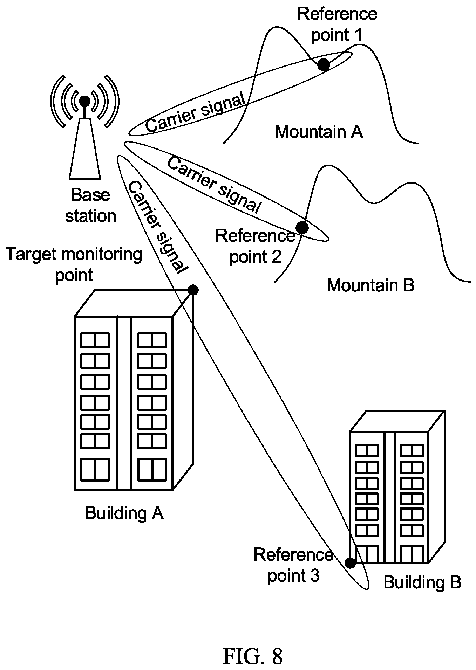

It can be understood that the target monitoring point and the reference point may be a certain target point on an object such as a mountain body, a building, or a bridge. The reference point may be one or more in number, and the target monitoring point and the reference point may be located on the same object. As shown in FIG. 7, the target monitoring point is at the highest part of building A, and the reference point is at the lowest part of building A. The target monitoring point and the reference point may also be located on different objects. As shown in FIG. 8, the target monitoring point is at building A, and the reference point is at building B.

It should be noted that the first deformation feature value is used to describe the deformation condition of the target monitoring point. The first deformation feature value includes both the state information of the target monitoring point itself and the observation errors caused by environmental factors during the observation process. The second deformation feature value is used to describe the deformation condition of the reference point. Compared with the first deformation feature value, by selecting a target point in the observation region at which no deformation has occurred as the reference point, the second deformation feature value of the reference point includes only the observation errors caused by environmental factors during the observation process.

At step S120, the first deformation feature value is compensated according to the second deformation feature value, to obtain a third deformation feature value corresponding to the target monitoring point.

It should be understood that the first deformation feature value includes the observation errors caused by environmental factors. If the deformation degree of the target monitoring point is inverted based on the first deformation feature value, the deformation sensing result will be insufficiently accurate. Since the second deformation feature value of the reference point includes only the observation errors caused by environmental factors during the observation process, after determining the first deformation feature value corresponding to the target monitoring point and the second deformation feature value corresponding to the reference point, the first deformation feature value is compensated according to the second deformation feature value, so as to compensate for the influence of the observation errors caused by environmental factors on the deformation sensing accuracy, thereby obtaining the third deformation feature value corresponding to the target monitoring point.

At step S130, the deformation degree of the target monitoring point is determined according to the third deformation feature value.

It should be understood that by compensating the first deformation feature value of the target monitoring point according to the second deformation feature value corresponding to the reference point, the influence of observation errors on inverting the deformation information of the target monitoring point is effectively reduced, and the deformation degree of the target monitoring point is more accurately inverted based on the third deformation feature value.

The deformation sensing method provided by the embodiment of the present application first determines the first deformation feature value corresponding to the target monitoring point and the second deformation feature value corresponding to the reference point, then compensates the first deformation feature value according to the second deformation feature value to obtain the third deformation feature value corresponding to the target monitoring point, and determines the deformation degree of the target monitoring point according to the third deformation feature value. By compensating the first deformation feature value of the target monitoring point using the second deformation feature value of the reference point, the influence of observation errors caused by the actual environment on inverting the deformation degree of the target monitoring point can be effectively compensated, and the deformation degree of the target monitoring point can be more accurately sensed.

In some embodiments, the reference point represents a target point at which no deformation has occurred, and the reference point is obtained by selection in the following manner:
selecting, in a target region, a target point satisfying a preset scattering parameter threshold as the reference point, wherein the scattering parameter threshold includes at least one of an amplitude fluctuation threshold, a phase fluctuation threshold, or a coherence fluctuation threshold.

It should be understood that the reference point represents a target point at which no deformation has occurred. A target point satisfying a preset scattering parameter threshold may be selected within the target region as the reference point, that is, a target point with stable scattering characteristics is selected within the target region as the reference point, for example, an exposed rock, a corner angle of a building, or another strong scatterer. The scattering parameter threshold includes at least one of an amplitude fluctuation threshold, a phase fluctuation threshold, or a coherence fluctuation threshold.

In the process of selecting the reference point, a plurality of rounds of carrier signals used for selecting the reference point may be transmitted to the target region, and echo signal sequences reflected by various target points within the target region are received. Subsequently, the scattering parameters of each echo signal in the echo signal sequences are analyzed, for example, the amplitude fluctuation information, the phase fluctuation information, or the coherence fluctuation information of the echo signal in the time dimension. Based on the scattering parameter analysis result, a target point with stable scattering characteristics is selected from the target region as the reference point, for example, by determining whether at least one of the amplitude fluctuation, the phase fluctuation, and the coherence fluctuation of the echo signal reflected by the target point in the time dimension is smaller than the corresponding scattering parameter threshold.

It should also be noted that, in addition to selecting a target point satisfying the preset scattering parameter threshold in the target region as the reference point, the reference point may also be obtained by deploying a reflection device, such as a radar corner reflector, in the observation region, and using the deployed reflection device as the reference point.

In the embodiments of the present application, since the reference point is a target point at which no deformation has occurred during the observation process of deformation sensing and the scattering characteristics are stable, the echo signal of the reference point is relatively stable in the time dimension. Based on the deformation feature value of the reference point, the deformation feature value of the target monitoring point can be conveniently compensated, and more accurate deformation information of the target monitoring point can also be obtained.

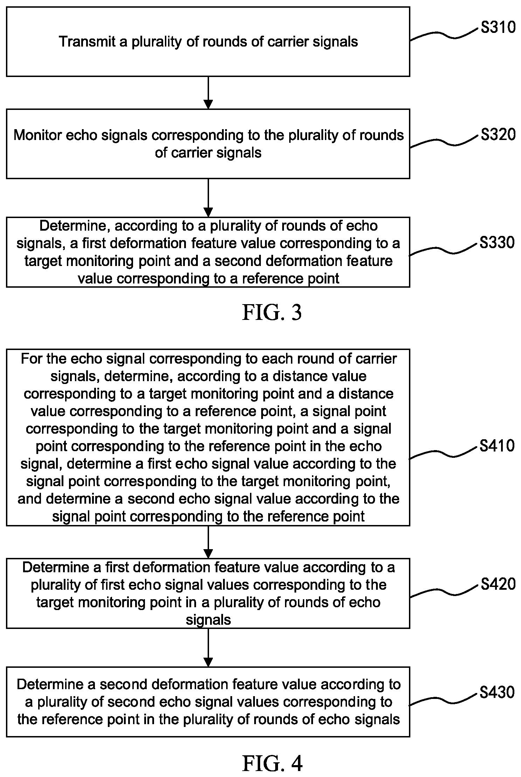

In some embodiments, referring to FIG. 3, FIG. 3 shows a schematic sub-step flowchart of step S110 in FIG. 1. As shown in FIG. 3, determining the first deformation feature value corresponding to the target monitoring point and the second deformation feature value corresponding to the reference point includes, but is not limited to, step S310 to step S330.

At step S310, a plurality of rounds of carrier signals are transmitted.

At step S320, echo signals corresponding to the plurality of rounds of carrier signals are monitored.

At step S330, the first deformation feature value corresponding to the target monitoring point and the second deformation feature value corresponding to the reference point are determined according to the plurality of rounds of echo signals.

It should be understood that the deformation sensing method may be applied to a communication and sensing device having the capability of transmitting an integrated waveform, such as an integrated communication and sensing base station. In the process of determining the first deformation feature value corresponding to the target monitoring point and the second deformation feature value corresponding to the reference point, first, the communication and sensing device transmits a plurality of rounds of carrier signals to the region where the target monitoring point is located, and then monitors the echo signals corresponding to the plurality of rounds of carrier signals, that is, the echo signals reflected by various target points within the region where the target monitoring point is located. By processing and analyzing the monitored plurality of rounds of echo signals, the first deformation feature value corresponding to the target monitoring point and the second deformation feature value corresponding to the reference point are determined.

In a specific embodiment, the first deformation feature value is a phase difference of the echo signal reflected by the target monitoring point, and the second deformation feature value is a phase difference of the echo signal reflected by the reference point.

It can be understood that since the phase information of the echo signal reflected by the target monitoring point before and after deformation is different, the deformation information of the target monitoring point is inverted according to the phase change of the plurality of rounds of echo signals. However, in an actual environment, the phase difference of the echo signal includes not only the state information of the target monitoring point itself, but also phase errors introduced by environmental factors such as noise and the atmospheric medium in the actual environment, which need to be compensated when analyzing the deformation degree of the target monitoring point, so as to more accurately sense the deformation degree of the target monitoring point. The phase error caused by noise can be compensated or reduced by improving the signal-to-noise ratio or by filtering processing. The phase error caused by the atmosphere refers to the fact that, during the propagation of electromagnetic wave signals, the atmospheric medium is affected by temperature, humidity, atmospheric pressure, and the like under different time and space conditions, causing the atmospheric refractive index to change, which causes the propagation direction of the electromagnetic wave to deflect, and further causes a delay in propagation time, and this phase error is superimposed on the true deformation phase of the target. By using the phase difference of the echo signal reflected by the target monitoring point as the first deformation feature value of the target monitoring point, and using the phase difference of the echo signal reflected by the reference point as the second deformation feature value of the reference point, the influence of the phase error caused by the atmosphere on inverting the deformation degree of the monitoring point is compensated by compensating the first deformation feature value with the second deformation feature value.

In addition, other signal feature information in the echo signal may also be selected as the deformation feature values of the target monitoring point and the reference point, so as to describe the deformation conditions of the target monitoring point and the reference point, as long as the signal feature information changes with the deformation of the target monitoring point itself, and can be used to invert the deformation degree of the target monitoring point.

In a specific embodiment, the deformation degree of the target monitoring point is measured by a deformation magnitude d. The deformation degree of the target monitoring point is determined according to the third deformation feature value of the target monitoring point, that is, a true deformation phase difference Δφ of the target monitoring point. The deformation magnitude d of the target monitoring point may be determined by the following formula (1): $d = \frac{λ}{4 π} Δφ$ (1) where λ is a wavelength of the carrier signal. If a carrier frequency of the carrier signal is *f_{c},* then the corresponding wavelength is *c*/*f_{c}.*

In some embodiments, referring to FIG. 4, FIG. 4 shows a schematic sub-step flowchart of step S330 in FIG. 3. As shown in FIG. 4, determining the first deformation feature value corresponding to the target monitoring point and the second deformation feature value corresponding to the reference point according to the plurality of rounds of echo signals includes step S410 to step S430.

At step S410, for the echo signal corresponding to each round of carrier signals, signal points respectively corresponding to the target monitoring point and the reference point in the echo signal are determined according to the distance values respectively corresponding to the target monitoring point and the reference point, a first echo signal value is determined according to the signal point corresponding to the target monitoring point, and a second echo signal value is determined according to the signal point corresponding to the reference point.

At step S420, the first deformation feature value is determined according to a plurality of the first echo signal values of the target monitoring point corresponding to the plurality of rounds of echo signals.

At step S430, the second deformation feature value is determined according to a plurality of the second echo signal values of the reference point corresponding to the plurality of rounds of echo signals.

It can be understood that, as shown in FIG. 8, a beam of carrier signal transmitted by the base station can be used to simultaneously monitor the target monitoring point at building A and the reference point at building B, and the deformation feature values of the target monitoring point and the reference point will be formed in the echo signal of the same beam. Therefore, among the echo signals corresponding to the plurality of rounds of carrier signals, for the echo signal corresponding to each round of carrier signals, the signal points respectively corresponding to the target monitoring point and the reference point in the echo signal are determined according to the distance values between the target monitoring point and the communication and sensing device and between the reference point and the communication and sensing device. For example, the deformation feature value of the target monitoring point is formed at a signal point A in the echo signal, and the deformation feature value of the reference point is formed at a signal point B in the echo signal. Then, the first echo signal value of the target monitoring point is determined according to the signal point A, and the second echo signal value of the reference point is determined according to the signal point B. Finally, the first deformation feature value is determined according to a plurality of the first echo signal values of the target monitoring point corresponding to the plurality of rounds of echo signals, and the second deformation feature value is determined according to a plurality of the second echo signal values of the reference point corresponding to the plurality of rounds of echo signals.

In a specific embodiment, the first echo signal value and the second echo signal value are phase values, the first deformation feature value is a phase difference of the echo signal reflected by the target monitoring point, and the second deformation feature value is a phase difference of the echo signal reflected by the reference point.

Specifically, the signal point A corresponding to the target monitoring point and the signal point B corresponding to the reference point in the time domain of the echo signal are determined according to the distance values between the target monitoring point and the communication and sensing device and between the reference point and the communication and sensing device. Subsequently, a phase value *α* of the echo signal at the signal point A and a phase value *β* of the echo signal at the signal point B are acquired. The phase difference of the echo signal reflected by the target monitoring point is determined according to a plurality of the phase values *α* in the plurality of rounds of echo signals corresponding to the target monitoring point, and the phase difference of the echo signal reflected by the reference point is determined according to a plurality of the phase values *β* in the plurality of rounds of echo signals corresponding to the reference point.

In some embodiments, transmitting the plurality of rounds of carrier signals and monitoring the echo signals corresponding to the plurality of rounds of carrier signals includes: in each round of transmission, transmitting carrier signals of different frequencies to a plurality of target points in the target region, wherein the plurality of target points include the target monitoring point and the reference point.

It should be understood that the embodiments of the present application adopt a frequency division multiple access manner to transmit carrier signals of different frequencies to a plurality of target points in the target region, wherein the plurality of target points include the target monitoring point and the reference point. As shown in FIG. 7, the base station transmits carrier signals of different frequencies to a plurality of target points in building A, wherein the frequencies are divided into *f*₁*, f*₂, *... , fₙ.* The target point at the bottom of the building is used as the reference point, and the frequency of the carrier signal corresponding to the reference point is *fₙ*. The target point at the top of the building is used as the target monitoring point, and the frequency of the carrier signal corresponding to the target monitoring point is *f*₁. Therefore, when the echo signals corresponding to the plurality of rounds of carrier signals are monitored, the echo signals reflected by the target monitoring point and the reference point can be acquired in a frequency division manner. Through processing such as downconversion, filtering, and Fourier transform, the deformation feature values of the target monitoring point and the reference point can be acquired, and the deformation degree of the target monitoring point can be further determined.

In some embodiments, a frequency of a carrier signal transmitted to the target monitoring point is a first frequency, and a frequency of a carrier signal transmitted to the reference point is a second frequency.

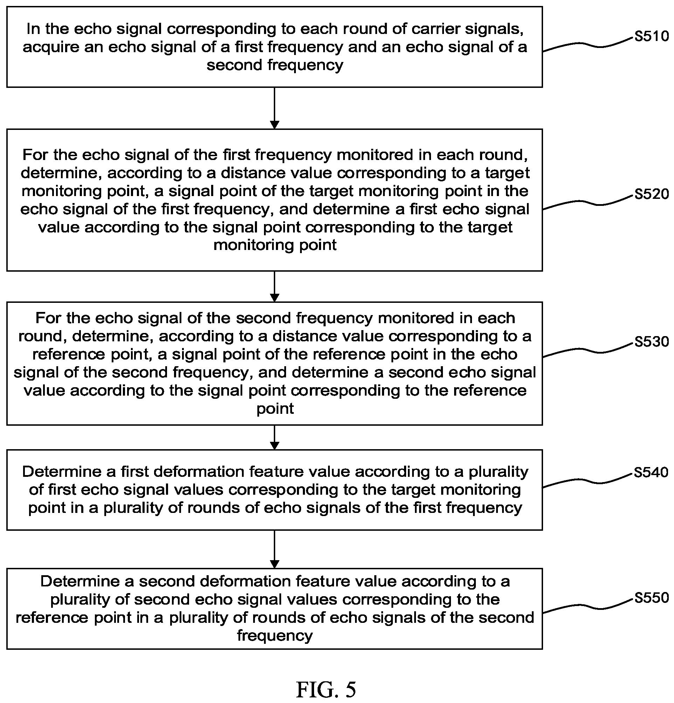

Correspondingly, referring to FIG. 5, FIG. 5 shows a schematic sub-step flowchart of step S330 in FIG. 3. As shown in FIG. 5, determining the first deformation feature value corresponding to the target monitoring point and the second deformation feature value corresponding to the reference point according to the plurality of rounds of echo signals includes step S510 to step S550.

At step S510, in the echo signal corresponding to each round of carrier signals, the echo signal of the first frequency and the echo signal of the second frequency are acquired.

At step S520, for the echo signal of the first frequency monitored in each round, a signal point of the target monitoring point in the echo signal of the first frequency is determined according to a distance value corresponding to the target monitoring point, and the first echo signal value is determined according to the signal point corresponding to the target monitoring point.

At step S530, for the echo signal of the second frequency monitored in each round, a signal point of the reference point in the echo signal of the second frequency is determined according to a distance value corresponding to the reference point, and the second echo signal value is determined according to the signal point corresponding to the reference point.

At step S540, the first deformation feature value is determined according to a plurality of the first echo signal values of the target monitoring point corresponding to the plurality of rounds of echo signals of the first frequency.

At step S550, the second deformation feature value is determined according to a plurality of the second echo signal values of the reference point corresponding to the plurality of rounds of echo signals of the second frequency.

It can be understood that the frequency division multiple access manner is adopted to transmit carrier signals of different frequencies to a plurality of target points in the target region, wherein the frequencies are divided into *f*₁*, f*₂, ..., *fₙ*. In each round of monitored echo signal, the scattering parameters of the echo signals are analyzed, for example, the amplitude fluctuation, the phase fluctuation, or the coherence fluctuation of the echo signal in the time dimension is analyzed. Based on the analysis result, a target point with stable scattering characteristics in the target region is regarded as the reference point. For example, by determining whether at least one of the amplitude fluctuation, the phase fluctuation, and the coherence fluctuation of the echo signal reflected by the target point in the time dimension is smaller than the corresponding scattering parameter threshold, whether the target point can be used as the reference point is determined, and then the frequencies of the echo signals reflected by the target monitoring point and the reference point are distinguished. For example, the first frequency of the echo signal reflected by the target monitoring point is *f*₁*,* and the second frequency of the echo signal reflected by the reference point is *fₙ.* Finally, the echo signal of the first frequency *f*₁ reflected by the target monitoring point and the echo signal of the second frequency *fₙ* reflected by the reference point are acquired in a frequency division manner.

The echo signal of the first frequency *f*₁ is the echo signal reflected by the target monitoring point. Therefore, for the echo signal of the first frequency *f*₁ monitored in each round, the signal point of the target monitoring point in the echo signal of the first frequency *f*₁ is determined according to the distance value between the target monitoring point and the communication and sensing device, and then the first echo signal value is determined according to the signal point corresponding to the target monitoring point.

The echo signal of the second frequency *fₙ* is the echo signal reflected by the reference point. Therefore, for the echo signal of the second frequency *fₙ* monitored in each round, the signal point of the reference point in the echo signal of the second frequency *fₙ* is determined according to the distance value between the reference point and the communication and sensing device, and then the second echo signal value is determined according to the signal point corresponding to the reference point.

Finally, the first deformation feature value is determined according to a plurality of the first echo signal values of the target monitoring point corresponding to the plurality of rounds of echo signals of the first frequency, and the second deformation feature value is determined according to a plurality of the second echo signal values of the reference point corresponding to the plurality of rounds of echo signals of the second frequency.

In a specific embodiment, the first echo signal value and the second echo signal value are phase values, the first deformation feature value is a phase difference of the echo signal reflected by the target monitoring point, and the second deformation feature value is a phase difference of the echo signal reflected by the reference point.

Specifically, the signal point A corresponding to the target monitoring point in the time domain of the echo signal of the first frequency is determined according to the distance value between the target monitoring point and the communication and sensing device, the signal point B corresponding to the reference point in the time domain of the echo signal of the second frequency is determined according to the distance value between the reference point and the communication and sensing device, and then a phase value *α* of the echo signal of the first frequency at the signal point A and a phase value *β* of the echo signal of the second frequency at the signal point B are determined. The phase difference of the echo signal of the first frequency reflected by the target monitoring point is determined according to a plurality of the phase values *α* in the plurality of rounds of echo signals of the first frequency corresponding to the target monitoring point, and the phase difference of the echo signal of the second frequency reflected by the reference point is determined according to a plurality of the phase values *β* in the plurality of rounds of echo signals of the second frequency corresponding to the reference point.

In some embodiments, the reference point is located in the target region in which the target monitoring point is located.

Correspondingly, compensating the first deformation feature value according to the second deformation feature value to obtain the third deformation feature value corresponding to the target monitoring point includes: subtracting the second deformation feature value from the first deformation feature value, to obtain the third deformation feature value corresponding to the target monitoring point.

It can be understood that the reference point is located in the target region in which the target monitoring point is located, which indicates that the reference point and the target monitoring point are in similar environments, and the influences of environmental factors such as the atmospheric medium on the deformation sensing of the target monitoring point and the reference point are approximately the same. Specifically, whether the reference point is located in the target region in which the target monitoring point is located may be determined according to position information such as the distance and direction of the reference point relative to the target monitoring point. The target region may be a spherical, square, or irregular region centered on the target monitoring point, and the size thereof may be determined by the actual environment in which the target monitoring point is located. Alternatively, the observation region may be divided into different target regions according to environmental information in the observation scenario, where the same target region has similar environments. When the reference point is located in the target region in which the target monitoring point is located, it is considered that the reference point and the target monitoring point are in similar environments, that is, the temperature, humidity, and atmospheric pressure in the environments are considered to be approximately the same.

It should be noted that the echo signal reflected by the target monitoring point is affected not only by the deformation of the target monitoring point itself but also by environmental factors. In the case where the reference point is located in the target region in which the target monitoring point is located, it is considered that the reference point and the target monitoring point are in similar environments, that is, the echo signals reflected by the reference point and the target monitoring point are affected by the environmental factors in the same way. As can be seen from the above, the first deformation feature value includes both the state information of the target monitoring point itself and the observation errors caused by environmental factors during the observation process, while the second deformation feature value includes only the observation errors caused by environmental factors during the observation process. It is considered that the observation errors corresponding to the reference point and the target monitoring point are the same. By choosing to subtract the second deformation feature value from the first deformation feature value, the influence of the observation errors caused by environmental factors on inverting the deformation degree of the target monitoring point can be compensated, and the third deformation feature value corresponding to the target monitoring point can be obtained.

When the first deformation feature value is the phase difference of the echo signal reflected by the target monitoring point, and the second deformation feature value is the phase difference of the echo signal reflected by the reference point, the phase information in the echo signal includes not only the state information of the target point itself, but also phase errors introduced by noise, the atmospheric medium, etc. in the actual environment. On the one hand, during the observation process of deformation sensing, by maintaining a good signal-to-noise ratio of the observation region or by filtering processing, the phase error caused by noise in the echo signal can be reduced as much as possible. On the other hand, since the reference point is located in the target region in which the target monitoring point is located, the environmental conditions in which the reference point and the target monitoring point are located can be considered to be similar, that is, the temperature, humidity, and atmospheric pressure are considered to be approximately the same. In other words, in the echo signals reflected by the reference point and the target monitoring point, the phase errors caused by the atmosphere are the same. Therefore, by subtracting the second deformation feature value of the reference point from the first deformation feature value of the target monitoring point, the third deformation feature value corresponding to the target monitoring point can be obtained, so as to compensate for the influence of the phase error caused by the atmosphere on the deformation sensing accuracy of the target monitoring point.

Exemplarily, a phase difference Δφ_{dp} of the echo signal reflected by the target monitoring point in the time dimension may be expressed by the following formula (2): ${Δφ}_{dp} = {φ}_{deformation , dp} + {φ}_{noise , dp} + {φ}_{atmosphere , dp}$ (2) where φ_{deformation,dp} represents a phase error caused by deformation in the echo signal reflected by the target monitoring point, φ_{noise,dp} represents a phase error caused by noise in the echo signal reflected by the target monitoring point, and φ_{atmosphere,dp} represents a phase error caused by the atmosphere in the echo signal reflected by the target monitoring point.

A phase difference Δφᵣₚ of the echo signal reflected by the reference point in the time dimension may be expressed by the following formula (3): ${Δφ}_{rp} = {φ}_{noise , rp} + {φ}_{atmosphere , rp}$ (3) where φ_{noise,rp} represents a phase error caused by noise in the echo signal reflected by the reference point, and φ_{atmosphere,rp} represents a phase error caused by the atmosphere in the echo signal reflected by the reference point.

During the observation process of deformation sensing, by maintaining a good signal-to-noise ratio of the observation region or by filtering processing, the noise phase errors φ_{noise,dp} and φ_{noise,rp} in the echo signals can be reduced as much as possible, and therefore the influence of the noise phase errors can be ignored, and only the influences of the atmospheric phase errors φ_{atmosphere,dp} and φ_{atmosphere,rp} are considered.

Meanwhile, since the reference point is located in the target region in which the target monitoring point is located, the environmental conditions in which the reference point and the target monitoring point are located can be considered to be similar, that is, the temperature, humidity, and atmospheric pressure are approximately the same, and the influences of the atmosphere on the deformation sensing observations of the target monitoring point and the reference point are the same, that is, φ_{atmosphere,ap} is the same as φ_{atmosphere,rp}. Therefore, the atmospheric phase error of the reference point can be used to compensate the atmospheric phase error of the target monitoring point, to obtain the third deformation feature value corresponding to the target monitoring point, that is, the true deformation phase at the deformation location. The third deformation feature value Δφ of the target monitoring point may be calculated by the following formula (4): $Δφ = {Δφ}_{dp} - {Δφ}_{rp} = {φ}_{deformation , dp}$ (4)

In a specific embodiment, the reference point is located in the target region in which the target monitoring point is located, and the deformation feature values of the reference point and the target monitoring point are formed in the echo signal of the same beam. As shown in FIG. 8, a beam of carrier signal transmitted by the base station can be used to simultaneously monitor the target monitoring point at building A and the reference point at building B. The first deformation feature value corresponding to the target monitoring point and the second deformation feature value corresponding to the reference point are determined from the echo signal according to the distance values between the target monitoring point and the communication and sensing device and between the reference point and the communication and sensing device.

In a specific embodiment, the reference point is located in the target region in which the target monitoring point is located, and in each round of carrier signal transmission, carrier signals of different frequencies are transmitted to the reference point and the target monitoring point. As shown in FIG. 7, the base station transmits a carrier signal of the first frequency to the target monitoring point, and transmits a carrier signal of the second frequency to the reference point. In the echo signals corresponding to the monitored carrier signals, the echo signal of the first frequency reflected by the target monitoring point and the echo signal of the second frequency reflected by the reference point are acquired in a frequency division manner. The first deformation feature value of the target monitoring point is determined from the echo signal of the first frequency, and the second deformation feature value of the reference point is determined from the echo signal of the second frequency.

In some embodiments, a quantity of the reference point is plural.

Correspondingly, referring to FIG. 2, FIG. 2 shows a schematic sub-step flowchart of step S120 in FIG. 1. As shown in FIG. 2, compensating the first deformation feature value according to the second deformation feature value to obtain the third deformation feature value corresponding to the target monitoring point includes, but is not limited to, step S210 to step S240.

At step S210, distance values corresponding to a plurality of reference points are acquired.

At step S220, fitting processing is performed on the second deformation feature values and the distance values corresponding to the plurality of reference points to obtain a target fitting function.

At step S230, a target compensation value is determined according to the target fitting function and a distance value corresponding to the target monitoring point.

At step S240, the target compensation value is subtracted from the first deformation feature value to obtain the third deformation feature value corresponding to the target monitoring point.

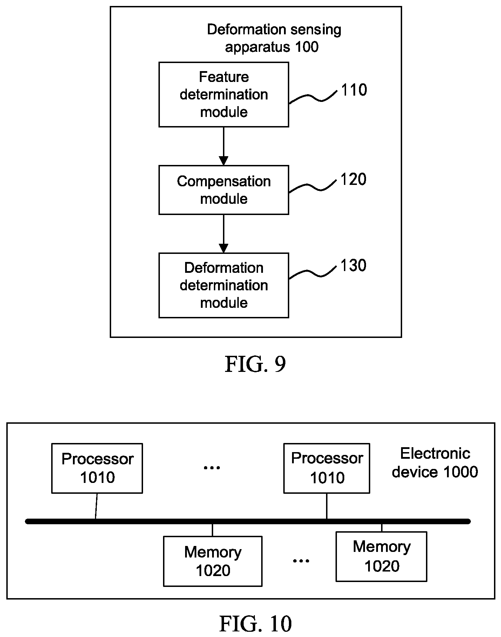

It should be understood that if a reference point located in the target region in which the target monitoring point is located cannot be found, a plurality of reference points may be selected in the observation region, and the first deformation feature value may be compensated based on the second deformation feature values corresponding to the plurality of reference points to obtain the third deformation feature value corresponding to the target monitoring point. Exemplarily, as shown in FIG. 9, the reference points include reference point 1, reference point 2, and reference point 3, wherein reference point 1 is located at mountain body A, reference point 2 is located at mountain body B, and reference point 3 is located at building B.

Since the environments in which the reference points are located may be inconsistent with the environment in which the target monitoring point is located, the observation errors caused by environmental factors in the second deformation feature values of the reference points may be inconsistent with those of the target monitoring point. Therefore, it is necessary to first perform fitting processing on the second deformation feature values and the distance values corresponding to the plurality of reference points to obtain a target fitting function, determine the relationship between the observation error from the target monitoring point and the observation errors from the reference points, then determine the target compensation value according to the target fitting function and the distance value corresponding to the target monitoring point, and then subtract the compensation value from the first deformation feature value, so as to completely compensate the observation error of the target monitoring point, thereby obtaining the third deformation feature value corresponding to the target monitoring point. By fitting the relationship between the deformation feature value of each reference point and the distance, and further inferring the target compensation value of the target monitoring point, that is, inferring the observation error caused by environmental factors in the first deformation feature value of the target monitoring point, the true deformation feature value of the target monitoring point can be obtained by subtracting the target compensation value from the first deformation feature value which includes the state information of the target monitoring point itself and the observation error caused by environmental factors.

When the first deformation feature value is the phase difference of the echo signal reflected by the target monitoring point, and the second deformation feature value is the phase difference of the echo signal reflected by the reference point, ignoring the phase error caused by noise, the phase difference of the reference point includes only the phase error caused by the atmosphere. By establishing a polynomial relationship between the atmospheric phase error and distance of each reference point to fit the influence of the atmospheric phase error, the atmospheric phase error in the phase difference corresponding to the target monitoring point is inferred.

Specifically, the phase difference Δφ_{dp} of the echo signal reflected by the target monitoring point in the time dimension may be expressed by the following formula (5): ${Δφ}_{dp} = {φ}_{deformation , dp} + {φ}_{atmosphere , dp}$ (5) where φ_{deformation,dp} represents the phase error caused by deformation in the echo signal reflected by the target monitoring point, and φ_{atmosphere,dp} is the phase error caused by the atmosphere in the echo signal reflected by the target monitoring point. φ_{atmosphere,dp} is inferred from the polynomial relationship between the atmospheric phase error and distance of the reference points. The true deformation phase φ_{deformation,dp} of the target monitoring point can be obtained by subtracting the inferred atmospheric phase error φ_{atmosphere,dp} from the phase difference Δφ_{dp} corresponding to the target monitoring point.

In a specific embodiment, the quantity of the reference points is plural, and in each round of carrier signal transmission, carrier signals of different frequencies are transmitted to the plurality of reference points and the target monitoring point. As shown in FIG. 9, the base station transmits a carrier signal of frequency *f*₁ to the target monitoring point, transmits a carrier signal of frequency *f*₂ to reference point 1, and transmits a carrier signal of frequency *f*₃ to reference point 2. In the echo signals corresponding to the monitored carrier signals, the echo signal of frequency *f*₁ reflected by the target monitoring point, the echo signal of frequency *f*₂ reflected by reference point 1, and the echo signal of frequency *f*₃ reflected by reference point 2 are acquired in a frequency division manner. The first deformation feature value of the target monitoring point is determined from the echo signal of frequency *f*₁*,* the second deformation feature value of reference point 1 is determined from the echo signal of frequency *f*₂, and the second deformation feature value of reference point 2 is determined from the echo signal of frequency *f*₃. Further, the distance values corresponding to reference point 1 and reference point 2 are acquired, the fitting processing is performed on the second deformation feature values and distance values corresponding to reference point 1 and reference point 2 to obtain the target fitting function, the target compensation value is determined according to the target fitting function and the distance value corresponding to the target monitoring point, and the target compensation value is subtracted from the first deformation feature value to obtain the third deformation feature value corresponding to the target monitoring point.

In a specific embodiment, the quantity of the reference points is plural, and in each round of carrier signal transmission, carrier signals of different frequencies are transmitted to the plurality of reference points and the target monitoring point, wherein the deformation feature value of at least one reference point and the deformation feature value of the target monitoring point are formed in the echo signal of the same beam. As shown in FIG. 9, the base station transmits a carrier signal of frequency *f*₁ to the target monitoring point, transmits a carrier signal of frequency *f*₂ to reference point 1, and transmits a carrier signal of frequency *f*₃ to reference point 2. At the same time, the carrier signal of frequency *f*₁ is also used to monitor reference point 3, that is, the carrier frequencies of the beams corresponding to the target monitoring point and reference point 3 are the same. In the echo signals corresponding to the monitored carrier signals, the echo signal of frequency *f*₁, the echo signal of frequency *f*₂ reflected by reference point 1, and the echo signal of frequency *f*₃ reflected by reference point 2 are acquired in a frequency division manner. The first deformation feature value of the target monitoring point and the second deformation feature value of reference point 3 are determined from the echo signal of frequency *f*₁ according to the distance values between the target monitoring point and the base station and between reference point 3 and the base station. The second deformation feature value of reference point 1 is determined from the echo signal of frequency *f*₂, and the second deformation feature value of reference point 2 is determined from the echo signal of frequency *f*₃. Further, the distance values corresponding to reference point 1, reference point 2, and reference point 3 are acquired, the fitting processing is performed on the second deformation feature values and distance values corresponding to reference point 1, reference point 2, and reference point 3 to obtain the target fitting function, the target compensation value is determined according to the target fitting function and the distance value corresponding to the target monitoring point, and the target compensation value is subtracted from the first deformation feature value to obtain the third deformation feature value corresponding to the target monitoring point.

The deformation sensing method provided by the embodiments of the present application is described below through specific examples.

### Example 1

As shown in FIG. 6, the deformation sensing method is applied to a base station. The base station transmits a plurality of rounds of carrier signals of a first frequency to a target monitoring point on building A, and transmits a plurality of rounds of carrier signals of a second frequency to a reference point on building A, wherein the target monitoring point is at the highest part of building A, the reference point is at the lowest part of building A, and the reference point is located in the target region in which the target monitoring point is located.

For the echo signals corresponding to each round of carrier signals, the echo signal of the first frequency from the target monitoring point and the echo signal of the second frequency from the reference point are acquired from the echo signals corresponding to the plurality of rounds of carrier signals in a frequency division manner.

The signal point of the target monitoring point in the echo signal of the first frequency is determined according to the distance value between the target monitoring point and the base station, and a first phase value of the signal point corresponding to the target monitoring point is determined. Subsequently, a first phase difference of the echo signal reflected by the target monitoring point during the observation process is determined according to a plurality of the first phase values in the plurality of rounds of echo signals of the first frequency corresponding to the target monitoring point.

The signal point of the reference point in the echo signal of the second frequency is determined according to the distance value between the reference point and the base station, and a second phase value of the signal point corresponding to the reference point is determined. Subsequently, a second phase difference of the echo signal reflected by the reference point during the observation process is determined according to a plurality of the second phase values in the plurality of rounds of echo signals of the second frequency corresponding to the reference point.

The second phase difference is subtracted from the first phase difference to obtain the true deformation phase difference corresponding to the target monitoring point, and the deformation degree of the target monitoring point is determined according to the true deformation phase difference.

### Example 2

As shown in FIG. 7, the deformation sensing method is applied to a base station. The base station transmits a plurality of rounds of carrier signals to a target monitoring point on building A, the same beam of carrier signal is also used to monitor a reference point located on building B, the observation errors of the target monitoring point and the reference point are formed in the echo signal of the same beam, and the reference point is located in the target region in which the target monitoring point is located.

For the echo signal corresponding to each round of carrier signals, signal points respectively corresponding to the target monitoring point and the reference point in the echo signal are determined according to the distance values between the target monitoring point and the base station and between the reference point and the base station.

A first phase value of the signal point corresponding to the target monitoring point is determined, and subsequently, a first phase difference of the echo signal reflected by the target monitoring point during the observation process is determined according to a plurality of the first phase values in the plurality of rounds of echo signals corresponding to the target monitoring point.

A second phase value of the signal point corresponding to the reference point is determined, and subsequently, a second phase difference of the echo signal reflected by the reference point during the observation process is determined according to a plurality of the second phase values in the plurality of rounds of echo signals corresponding to the reference point.

The second phase difference is subtracted from the first phase difference to obtain the true deformation phase difference corresponding to the target monitoring point, and the deformation degree of the target monitoring point is determined according to the true deformation phase difference.

### Example 3

As shown in FIG. 8, the deformation sensing method is applied to a base station. The base station transmits carrier signals of different frequencies to a plurality of target points in the observation region, and the plurality of target points include a target monitoring point and reference points.

For the echo signals corresponding to each round of carrier signals, the echo signal of frequency *f*₁ from the target monitoring point, the echo signal of frequency *f*₂ from reference point 1, and the echo signal of frequency *f*₃ from reference point 2 are acquired from the echo signals corresponding to the plurality of rounds of carrier signals in a frequency division manner, wherein the phase difference of reference point 3 and the phase difference of the target monitoring point are formed in the echo signal of frequency *f*₁.

For the echo signal corresponding to each round of carrier signals, signal points respectively corresponding to the target monitoring point and reference point 3 in the echo signal of frequency *f*₁ are determined according to the distance values between the target monitoring point and the base station and between reference point 3 and the base station; a first phase value of the signal point corresponding to the target monitoring point is determined, and a first phase difference of the echo signal reflected by the target monitoring point during the observation process is determined according to a plurality of the first phase values in the plurality of rounds of echo signals of frequency *f*₁ corresponding to the target monitoring point; a second phase value of the signal point corresponding to reference point 3 is determined, and subsequently, a second phase difference of the echo signal reflected by reference point 3 during the observation process is determined according to a plurality of the second phase values in the plurality of rounds of echo signals of frequency *f*₁ corresponding to reference point 3.

A signal point corresponding to reference point 1 in the echo signal of frequency *f*₂ is determined according to the distance value between reference point 1 and the base station, and subsequently, a second phase value of the signal point corresponding to reference point 1 is determined, and a second phase difference of the echo signal reflected by reference point 1 during the observation process is determined according to a plurality of the second phase values in the plurality of rounds of echo signals of frequency *f*₂ corresponding to reference point 1.

A signal point corresponding to reference point 2 in the echo signal of frequency *f*₃ is determined according to the distance value between reference point 2 and the base station, and subsequently, a second phase value of the signal point corresponding to reference point 2 is determined, and a second phase difference of the echo signal reflected by reference point 2 during the observation process is determined according to a plurality of the second phase values in the plurality of rounds of echo signals of frequency *f*₃ corresponding to reference point 2.

Fitting processing is performed on the second phase values and the distance values corresponding to reference point 1, reference point 2, and reference point 3 to obtain a target fitting function. A phase compensation value is determined according to the target fitting function and the distance value corresponding to the target monitoring point. The phase compensation value is subtracted from the first phase value to obtain the true deformation phase difference corresponding to the target monitoring point, and the deformation degree of the target monitoring point is determined according to the true deformation phase difference.

An embodiment of the present application also provides a deformation sensing apparatus. As shown in FIG. 9, the deformation sensing apparatus 100 includes a feature determination module 110, a compensation module 120, and a deformation determination module 130.

The feature determination module 110 is configured to determine a first deformation feature value corresponding to a target monitoring point and a second deformation feature value corresponding to a reference point.

The compensation module 120 is configured to compensate the first deformation feature value according to the second deformation feature value, to obtain a third deformation feature value corresponding to the target monitoring point.

The deformation determination module 130 is configured to determine the deformation degree of the target monitoring point according to the third deformation feature value.

It should be noted that, since the information interaction, execution process, and other contents between the modules of the above apparatus are based on the same concept as the method embodiments of the present application, for the specific functions thereof and the technical effects brought about, reference may be made to the method embodiments section, and details will not be repeated herein.

An embodiment of the present application also provides an electronic device. As shown in FIG. 10, the electronic device 1000 includes:
one or more processors 1010; and
a memory 1020 having one or more programs stored thereon, wherein the one or more programs, when executed by the one or more processors 1010, cause the one or more processors 1010 to carry out the deformation sensing method.

The memory 1020, as a non-transitory network system, may be used to store non-transitory software programs and non-transitory computer-executable programs. In addition, the memory 1020 may include a high-speed random access memory, and may also include a non-transitory memory, for example, at least one disk storage device, flash memory device, or other non-transitory solid-state storage device. In some embodiments, the memory 1020 may optionally include memories 1020 remotely arranged with respect to the processor 1010, and these remote memories 1020 may be connected to the processor 1010 via a network. Examples of the above network include, but are not limited to, the Internet, an intranet, a local area network, a mobile communication network, and combinations thereof.

The memory 1020 may be implemented in the form of a read-only memory (Read Only Memory, ROM), a static storage device, a dynamic storage device, or a random access memory (Random Access Memory, RAM). The memory 1020 may store an operating system and other application programs. When the technical solutions provided by the embodiments of this specification are implemented by software or firmware, the relevant program codes are stored in the memory 1020 and are called and executed by the processor 1010 to implement the methods of the embodiments of the present application.

The processor 1010 may be implemented in the form of a general-purpose CPU (Central Processing Unit), a microprocessor, an Application Specific Integrated Circuit (ASIC), or one or more integrated circuits, etc., and is used for executing related programs to implement the technical solutions provided by the embodiments of the present application.

In some embodiments, the electronic device further includes:
an input/output interface, for realizing information input and output;
a communication interface, for realizing communication interaction between the device and other devices, where the communication may be realized in a wired manner (such as USB, network cable, etc.) or in a wireless manner (such as a mobile network, WIFI, Bluetooth, etc.);
a bus, for transmitting information between various components of the device (such as the processor 1010, the memory 1020, the input/output interface, and the communication interface);
wherein the processor 1010, the memory 1020, the input/output interface, and the communication interface may realize communication connections with each other inside the device through the bus.

An embodiment of the present application also provides a computer-readable storage medium storing computer-executable instructions, where the computer-executable instructions are used to execute the deformation sensing method provided by the embodiments of the present application.

An embodiment of the present application also provides a computer program product, including a computer program or computer instructions, where the computer program or computer instructions are stored in a computer-readable storage medium. A processor of a computer device reads the computer program or computer instructions from the computer-readable storage medium, and the processor executes the computer program or computer instructions, causing the computer device to implement the deformation sensing method provided by the embodiments of the present application.

The system architectures and application scenarios described in the embodiments of the present application are intended to more clearly explain the technical solutions of the embodiments of the present application, and do not constitute a limitation on the technical solutions provided by the embodiments of the present application. Those skilled in the art may know that, with the evolution of system architectures and the emergence of new application scenarios, the technical solutions provided by the embodiments of the present application are equally applicable to similar technical problems.

Those of ordinary skill in the art can understand that all or part of the processes of implementing the methods of the above embodiments may be completed by a computer program instructing relevant hardware. The computer program may be stored in a non-volatile computer-readable storage medium, and when executed, may include the processes of the embodiments of the above methods. Any reference to memory, storage, database, or other media used in the various embodiments provided in this application may include non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in various forms, such as static RAM (SRAM), dynamic RAM (DRAM), synchronous DRAM (SDRAM), double data rate SDRAM (DDR SDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM), etc.

Those of ordinary skill in the art can understand that all or some of the steps in the methods disclosed above, as well as the systems, may be implemented as software, firmware, hardware, and appropriate combinations thereof. Some or all of the physical components may be implemented as software executed by a processor, such as a central processing unit, a digital signal processor, or a microprocessor, or as hardware, or as an integrated circuit, such as an application specific integrated circuit. Such software may be distributed on a computer-readable medium, which may include a computer storage medium (or a non-transitory medium) and a communication medium (or a transitory medium). As is well known to those of ordinary skill in the art, the term computer storage medium includes volatile and non-volatile, removable and non-removable media implemented in any method or technology for storing information (such as computer-readable instructions, data structures, program modules, or other data). The computer storage medium includes, but is not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or any other medium that can be used to store the desired information and can be accessed by a computer. In addition, as is well known to those of ordinary skill in the art, the communication medium typically includes computer-readable instructions, data structures, program modules, or other data in modulated data signals such as carrier waves or other transmission mechanisms, and may include any information delivery medium.

Some embodiments of the present application have been described above with reference to the accompanying drawings, but the scope of rights of the present application is not limited thereby. Any modifications, equivalent replacements, and improvements made by those skilled in the art without departing from the scope and essence of the present application shall fall within the scope of rights of the present application.

## Claims

1. A deformation sensing method, comprising:
determining a first deformation feature value corresponding to a target monitoring point and a second deformation feature value corresponding to a reference point;
compensating the first deformation feature value according to the second deformation feature value, to obtain a third deformation feature value corresponding to the target monitoring point; and
determining a deformation degree of the target monitoring point according to the third deformation feature value.

2. The method of claim 1, wherein the reference point is located in a target region in which the target monitoring point is located; and the compensating the first deformation feature value according to the second deformation feature value to obtain the third deformation feature value corresponding to the target monitoring point comprises:
subtracting the second deformation feature value from the first deformation feature value, to obtain the third deformation feature value corresponding to the target monitoring point.

3. The method of claim 1, wherein a quantity of the reference point is plural; and the compensating the first deformation feature value according to the second deformation feature value to obtain the third deformation feature value corresponding to the target monitoring point comprises:
acquiring distance values corresponding to a plurality of the reference points;
performing fitting processing on the second deformation feature values and the distance values corresponding to the plurality of reference points, to obtain a target fitting function;
determining a target compensation value according to the target fitting function and a distance value corresponding to the target monitoring point; and
subtracting the target compensation value from the first deformation feature value, to obtain the third deformation feature value corresponding to the target monitoring point.

4. The method of claim 1, wherein the determining the first deformation feature value corresponding to the target monitoring point and the second deformation feature value corresponding to the reference point comprises:
transmitting a plurality of rounds of carrier signals;
monitoring echo signals corresponding to the plurality of rounds of the carrier signals; and
determining, according to a plurality of rounds of the echo signals, the first deformation feature value corresponding to the target monitoring point and the second deformation feature value corresponding to the reference point.

5. The method of claim 4, wherein the determining, according to the plurality of rounds of the echo signals, the first deformation feature value corresponding to the target monitoring point and the second deformation feature value corresponding to the reference point comprises:
for the echo signal corresponding to each round of the carrier signals, determining, according to a distance value corresponding to the target monitoring point and a distance value corresponding to the reference point, a signal point corresponding to the target monitoring point and a signal point corresponding to the reference point in the echo signal, determining a first echo signal value according to the signal point corresponding to the target monitoring point, and determining a second echo signal value according to the signal point corresponding to the reference point;
determining the first deformation feature value according to a plurality of the first echo signal values corresponding to the target monitoring point in the plurality of rounds of the echo signals; and
determining the second deformation feature value according to a plurality of the second echo signal values corresponding to the reference point in the plurality of rounds of the echo signals.

6. The method of claim 4, wherein the transmitting the plurality of rounds of carrier signals and monitoring the echo signals corresponding to the plurality of rounds of the carrier signals comprises:
in each round of transmission, transmitting carrier signals of different frequencies to a plurality of target points in a target region, wherein the plurality of target points comprise the target monitoring point and the reference point.

7. The method of claim 6, wherein a frequency of a carrier signal transmitted to the target monitoring point is a first frequency, and a frequency of a carrier signal transmitted to the reference point is a second frequency; and the determining, according to the plurality of rounds of the echo signals, the first deformation feature value corresponding to the target monitoring point and the second deformation feature value corresponding to the reference point comprises:
in the echo signal corresponding to each round of the carrier signals, acquiring an echo signal of the first frequency and an echo signal of the second frequency;
for the echo signal of the first frequency monitored in each round, determining, according to a distance value corresponding to the target monitoring point, a signal point of the target monitoring point in the echo signal of the first frequency, and determining a first echo signal value according to the signal point corresponding to the target monitoring point;
for the echo signal of the second frequency monitored in each round, determining, according to a distance value corresponding to the reference point, a signal point of the reference point in the echo signal of the second frequency, and determining a second echo signal value according to the signal point corresponding to the reference point;
determining the first deformation feature value according to a plurality of the first echo signal values corresponding to the target monitoring point in a plurality of rounds of the echo signals of the first frequency; and
determining the second deformation feature value according to a plurality of the second echo signal values corresponding to the reference point in a plurality of rounds of the echo signals of the second frequency.

8. The method of claim 1, wherein the reference point represents a target point at which no deformation has occurred, and the reference point is obtained by selection in the following manner:
selecting, in a target region, a target point satisfying a preset scattering parameter threshold as the reference point, wherein the scattering parameter threshold comprises at least one of an amplitude fluctuation threshold, a phase fluctuation threshold, or a coherence fluctuation threshold.

9. A deformation sensing apparatus, comprising:
a feature determination module, configured to determine a first deformation feature value corresponding to a target monitoring point and a second deformation feature value corresponding to a reference point;
a compensation module, configured to compensate the first deformation feature value according to the second deformation feature value, to obtain a third deformation feature value corresponding to the target monitoring point; and
a deformation determination module, configured to determine a deformation degree of the target monitoring point according to the third deformation feature value.

10. An electronic device, comprising:
one or more processors; and
a memory, having one or more programs stored thereon, wherein the one or more programs, when executed by the one or more processors, cause the one or more processors to carry out the deformation sensing method of any one of claims 1-8.

11. A computer-readable storage medium, having a computer program stored thereon, wherein the program, when executed by a processor, causes the processor to carry out the deformation sensing method of any one of claims 1-8.

12. A computer program product, comprising a computer program, wherein the computer program, when executed by a processor, causes the processor to carry out the deformation sensing method of any one of claims 1-8.
